# EUROPÄISCHE PATENTSCHRIFT

(11) **EP 2 004 901 B1**
(45) Veröffentlichungstag und Bekanntmachung des Hinweises auf die Patenterteilung: **26.05.2010**
(21) Anmeldenummer: 07726795.3
(22) Anmeldetag: 12.03.2007
(51) Int. Cl.: D06F 58/28

(54) **HAUSGERÄT ZUR PFLEGE VON WÄSCHESTÜCKEN**
DOMESTIC APPLIANCE FOR TREATING ITEMS OF LAUNDRY
APPAREIL MENAGER POUR LE SOIN DU LINGE

(30) Priorität: 06.04.2006 DE 102006016294
(43) Veröffentlichungstag der Anmeldung: 24.12.2008
(73) Patentinhaber: BSH Bosch und Siemens Hausgeräte GmbH, 81739 München (DE)
(72) Erfinder: STEFFENS, Günter, 14624 Dallgow-Döberitz (DE); ALBAYRAK, Hasan Gökcer, 13469 Berlin (DE); GRUNERT, Klaus, 13465 Berlin (DE); STOLZE, Andreas, 14612 Falkensee (DE)
(86) Internationale Anmeldenummer: PCT/EP2007/052285
(87) Internationale Veröffentlichungsnummer: WO 2007/113081

(56) Entgegenhaltungen:
- EP-A- 1 441 058
- EP-A- 1 559 829
- EP-A1- 0 999 302
- WO-A-2005/040483
- DE-U1- 20 101 641

## Beschreibung

Die Erfindung betrifft ein Hausgerät zur Pflege von Wäschestücken, mit einem Behälter zur Aufnahme von Wäschestücken und einer Prozessluftführung, welche mit dem Behälter verbunden ist, wobei Prozessluft durch den Behälter strömt. Das Hausgerät umfasst auch eine Wärmepumpe mit einem ersten und einem zweiten Wärmetauscher, welche in der Prozessluftführung angeordnet sind, wobei der erste Wärmetauscher zur Entfeuchtung der aus dem Behälter austretenden Prozessluft und der zweite Wärmetauscher zur Erwärmung der Prozessluft vor dem Eintritt in den Behälter ausgebildet ist (siehe z. B. EP-A-1559829).

Mit dem Begriff "Prozessluftführung" sind sowohl ein geschlossener Prozessluftkreislauf als auch eine offene Prozessluftführung umfasst. Mit dem Begriff "Hausgerät zur Pflege von Wäschestücken" ist jedes derartige Gerät umfasst, das zum Trocknen von Wäsche eingerichtet ist, wobei sowohl ein Ablufttrockner, bei dem die Prozessluft in einer offenen Prozessluftführung nach Berührung mit der Wäsche ins Freie geleitet wird, als auch ein Umlufttrockner, bei dem die Prozessluft in einem Prozessluftkreislauf geführt wird, umfasst sind. Die Prozessluftführung soll im Folgenden insbesondere alle Luftkanäle und Bauteile umfassen, durch die im Betrieb Prozessluft hindurchströmt.

Ein Wärmepumpentrockner, der insbesondere auf dem Prinzip der Thermo-Elektrik beruht, verfügt zum Ende eines Trocknungsprozesses über erhebliche Wärmekapazität, da die Flächen der Wärmetauscher und auch das gesamte Hausgerät im Verlauf des Trocknungsprozesses aufgeheizt werden. Da die Prozesstemperaturen und damit die Fähigkeit der umgewälzten Prozessluft zur Aufnahme von Wasser nach einem Abschalten der Wärmepumpe relativ stark absinken und die für die Abscheidung von Feuchte vorgesehenen Wärmetauscher in diesem Temperaturbereich einen relativ geringen Beitrag zur Abscheidung von Wasser aus der Prozessluft liefern, ist die im Hausgerät nach dem Abschalten der Wärmepumpe gespeicherte Energie nur relativ schwer nutzbar. Ein weiterer Nachteil ist darin zu sehen, dass die kalte Seite der Wärmepumpe nach deren Abschalten innerhalb relativ kurzer Zeit durch Wärmeleitung ein ähnliches Temperaturniveau wie die warme Seite der Wärmepumpe annimmt, so dass dort keine Kondensation mehr stattfindet. Die gespeicherte Energie trägt somit zur Abführung von Feuchte aus den zu trocknenden Wäschestücken nicht wesentlich bei.

Daher ist es Aufgabe der vorliegenden Erfindung, ein gattungsgemäßes Hausgerät zur Pflege von Wäschestücken zu schaffen, bei dem die Trocknung der in dem Behälter enthaltenen Wäschestücke in verbesserter Weise erfolgen kann.

Diese Aufgabe wird durch ein Hausgerät, welches die Merkmale nach Patentanspruch 1 aufweist, gelöst.

Ein erfindungsgemäßes Hausgerät zur Pflege von Wäschestücken umfasst einen Behälter zur Aufnahme von Wäschestücken und eine Prozessluftführung, welche mit dem Behälter verbunden ist, wobei Prozessluft dieser Prozessluftführung durch den Behälter strömt. Des Weiteren umfasst das Hausgerät eine Wärmepumpe mit einem ersten und einem zweiten Wärmetauscher, welche in der Prozessluftführung angeordnet sind, wobei der erste Wärmetauscher zur Entfeuchtung der aus dem Behälter austretenden Prozessluft und der zweite Wärmetauscher zur Erwärmung der Prozessluft vor dem Eintritt in den Behälter ausgebildet ist. Darüber hinaus umfasst das Hausgerät eine Lufttauschvorrichtung, welche in der Prozessluftführung vor der Wärmepumpe angeordnet ist und situationsabhängig, insbesondere nach dem Abschalten der Wärmepumpe, zum Abführen von in der Prozessluftführung enthaltener feuchter Prozessluft aus der Prozessluftführung und zum Einführen von trockener Luft aus einem Innenraum des Hausgeräts in die Prozessluftführung ausgebildet ist.

Dadurch wird die nach dem Abschalten der Wärmepumpe in dem Hausgerät gespeicherte Energie für eine Resttrocknung der Wäschestücke genutzt und dadurch der Trocknungsprozess verbessert, nicht zuletzt deshalb, weil er die eingesetzte Energie besser zur Trocknung nutzt. Die nach dem Abschalten in der Prozessluftführung enthaltene warme und feuchte Prozessluft wird somit in einfacher und aufwandsarmer Weise nach außen abgeleitet, wobei trockene Luft eingeführt und somit auch nach dem Abschalten der Wärmepumpe die in dem Hausgerät noch vorhandene Wärme genutzt wird.

Vorzugsweise ist die Prozessluftführung zumindest bereichsweise als Kanal bzw. als Strömungskanal ausgebildet, welcher Strömungskanal eine Kanalwand aufweist, wobei in Strömungsrichtung der Prozessluft eine erste und zumindest eine zweite verschließbare Öffnung in der Kanalwand ausgebildet sind. Durch eine derartige bewusste Leckage vor der Wärmepumpe kann die restliche warme feuchte Luft aus dem Hausgerät einfach herausgebracht und durch trockene Luft aus dem Innenraum des Hausgeräts ersetzt werden.

Vorzugsweise ist die erste verschließbare Öffnung vor und die zweite verschließbare Öffnung nach dem ersten Wärmetauscher ausgebildet.

Vorzugsweise umfasst die Lufttauschvorrichtung eine erste Klappe zum Abdecken der ersten Öffnung und eine zweite Klappe zum Abdecken der zweiten Öffnung. Durch diese Ausgestaltung wird eine mechanisch relativ einfach zu konzipierende Vorrichtung geschaffen, welche mit einer relativ geringen Anzahl an Bauteilen einen Luftaustausch in der Prozessluftführung auskommt.

Vorzugsweise umfasst die Lufttauschvorrichtung eine Betätigungseinrichtung zum situationsabhängigen Betätigen der Klappen. Es kann vorgesehen sein, dass lediglich eine Betätigungseinrichtung vorgesehen ist, durch welche beide Klappen betätigbar sind. Ebenso kann jedoch auch vorgesehen sein, dass jeder Klappe eine eigene separate Betätigungseinrichtung zugeordnet ist.

Die Betätigungseinrichtung umfasst in bevorzugter Weise zumindest einen Antrieb, welcher zum Betätigen der Klappe ausgebildet ist. Hier kann vorgesehen sein, dass mittels eines einzigen Elektromotors beide Klappen betätigbar sind oder wiederum jeder einzelnen Klappe ein eigener Elektromotor zugeordnet ist. Der zumindest eine Antrieb ist bevorzugt über eine Steuereinrichtung des Hausgeräts steuerbar.

In einer weiteren Ausgestaltung umfasst die Betätigungseinrichtung vorzugsweise zumindest einen thermo-hydraulischen Zylinder, welcher zur Betätigung der beiden Klappen mit diesen gekoppelt ist. Es kann dabei vorgesehen sein, dass ein einziger thermo-hydraulischer Zylinder zur Betätigung beider Klappen oder für jede Klappe ein separater thermo-hydraulischer Zylinder ausgebildet ist. Bevorzugt ist der thermo-hydraulische Zylinder über jeweils eine Koppelstange mit einer Klappe verbunden.

Vorzugsweise weist der thermo-hydraulische Zylinder ein Medium auf, welches temperaturabhängig sein Volumen ändert und abhängig davon die Klappen betätigt. Durch diese temperaturabhängige Volumenänderung des Mediums werden die Koppelstangen entsprechend hin und her bewegt, wodurch auch die damit verbundenen Klappen geöffnet und geschlossen werden.

Das Medium weist vorzugsweise zumindest anteilig Wachs auf. Bevorzugt kann vorgesehen sein, dass das Medium ausschließlich Wachs ist. Durch diese Ausgestaltung kann in relativ kostengünstiger Weise eine Betätigungsvorrichtung zum Betätigen der Klappen geschaffen werden, welche darüber hinaus auch relativ verschleißarm ist. Die Erwärmung des Mediums erfolgt insbesondere über eine separate Heizeinheit, insbesondere eine PTC-Heizeinheit. Vorzugsweise ist der thermo-hydraulische Zylinder und insbesondere das Medium mit der Wärmepumpe thermisch gekoppelt, so dass eine Erwärmung des Mediums bevorzugt durch eine Temperaturübertragung auf das Medium während eines Temperaturausgleichs zwischen den Wärmetauschern nach dem Abschalten der Wärmepumpe erfolgt.

Vorzugsweise sind Federelemente angeordnet, wobei jedes der Federelemente mit einer Klappe gekoppelt ist und das Schließen dieser Klappe unterstützt. Durch die Ausgestaltung der Betätigungseinrichtung mit einem thermo-hydraulischen Zylinder, welcher als Medium Wachs enthält, kann ein Schmelzen und Ausdehnen von diesem erreicht werden, wenn eine Umgebungstemperatur um diesen Zylinder eine Grenztemperatur erreicht bzw. diese überschreitet. Das ausgedehnte Wachs bewegt dann die Koppelstangen, über die die beiden Klappen geöffnet werden können. Bei dann wieder sinkender Temperatur verringert sich das Volumen des Wachses und der oder die Koppelstangen werden Federunterstützt wieder in den Zylinder eingedrückt und die Klappen geschlossen. Die verschließbaren Öffnungen in der Kanalwand sind dann bevorzugt dichtend abgedeckt. Ein Vorteil dieser Ausgestaltung ist, dass die beiden Klappen im Wesentlichen gleichzeitig bedient, also geöffnet oder geschlossen werden können und darüber hinaus keine zusätzliche Erwärmungsquelle bzw. ein zusätzliches Steuerungssystem zur Regelung bzw. Ansteuerung der Klappen benötigt wird. Die Erwärmungsenergie, welche erforderlich ist, um das Wachs zum Schmelzen und somit zum Ausdehnen zu bringen, wird beim Ausschalten der Wärmepumpe durch die kalte Seite dieser Wärmepumpe und somit durch den ersten Wärmetauscher erbracht. Die beiden Wärmetauscher der Wärmepumpe sind insbesondere über ein thermoelektrisches Modul mit Peltier-Elementen verbunden, durch welche die Temperatureinstellung der Wärmetauscher erfolgt. Beim Ausschalten der Wärmepumpe wird somit über diese Peltier-Elemente das Temperaturniveau der warmen Seite, welche durch den zweiten Wärmetauscher, gegeben ist, gesenkt und das Temperaturniveau der kalten Seite derart erhöht, dass ein Temperaturausgleich stattfindet. Nach Ende der Trocknung kühlt sich das gesamte Hausgerät ab; dabei wird der thermo-hydraulische Zylinder wieder in die Ausgangsstellung zurückgedrückt und schließt dabei wieder beide Klappen. Ein sofortiger Neustart des Hausgeräts wird durch eine derartige Konstellation ebenfalls ermöglicht, da die zumindest beiden Klappen durch die schnelle Abkühlung der kalten Seite der Wärmepumpe sich sofort wieder schließen würden.

Vorzugsweise ist die Zuluft bzw. die trockene Luft aus dem Innenraum des Hausgeräts in die Prozessluftführung einsaugbar. Die Zuführung dieser Zuluft ist deshalb vorteilhaft, da die im Innenraum des Hausgeräts vorhandene Luft bereits vorgewärmt ist und dadurch den weiteren Trocknungsprozess begünstigt. Die durch die Lufttauschvorrichtung aus der Prozessluftführung abzuführende feuchte Luft wird bevorzugt aus dem Hausgerät herausgeführt, vorzugsweise nach hinten. Dazu ist vorzugsweise ein Abführungskanal vorgesehen, welcher an die entsprechende verschließbare Öffnung des Kanals der Prozessluftführung mündet. Auch für die Zuführung der trockenen Luft kann ein Zuführkanal vorgesehen sein, welcher an die entsprechende verschließbare Öffnung des Kanals der Prozessluftführung mündet.

In einer weiteren Ausführung umfasst die Betätigungseinrichtung zumindest ein Bimetallelement, welches mit den Klappen gekoppelt ist, wobei abhängig von der temperaturabhängigen Formveränderung des Bimetallelements die Klappen betätigbar sind. Dadurch kann ebenfalls eine sehr einfache Ausgestaltung realisiert werden, durch das steuerungs- und versorgungsunabhängig ein Betätigen der Klappen ermöglicht werden kann. Das Bimetallelement verbiegt sich abhängig von seiner Temperatur, wobei dadurch die beiden Klappen betätigbar sind.

In bevorzugter Weise ist das Hausgerät als Wäschetrockner ausgebildet. Bevorzugt ist der Wäschetrockner als Umlufttrockner ausgebildet und durch die Erfindung als Hybrid weitergebildet. Dieser Hybrid arbeitet zunächst als Umlufttrockner und schaltet in einem späteren Betriebsstadium, wenn die zu bearbeitende Wäsche schon relativ trocken ist und der Kondensationsprozess an Wirksamkeit verliert, auf eine Art Ablufttrockner um. Wesentlich dabei ist, dass dann erwärmte trockene Frischluft aus dem Innenraum des Wäschetrockners in die Prozessluftführung geleitet wird.

Ausführungsbeispiele der Erfindung werden nachfolgend anhand der schematischen Zeichnungen näher erläutert. Darin zeigen:
- Fig. 1: eine schematische Darstellung eines Wäschetrockners;
- Fig. 2: eine perspektivische Darstellung eines Teilbereichs des Wäschetrockners;
- Fig. 3: eine schematische Darstellung eines ersten Ausschnitts gemäß der Darstellung in Fig. 2; und
- Fig. 4: eine schematische Darstellung eines weiteren Ausschnitts der Darstellung gemäß Fig. 2.

In den Figuren werden gleiche oder funktionsgleiche Elemente mit den gleichen Bezugszeichen versehen.

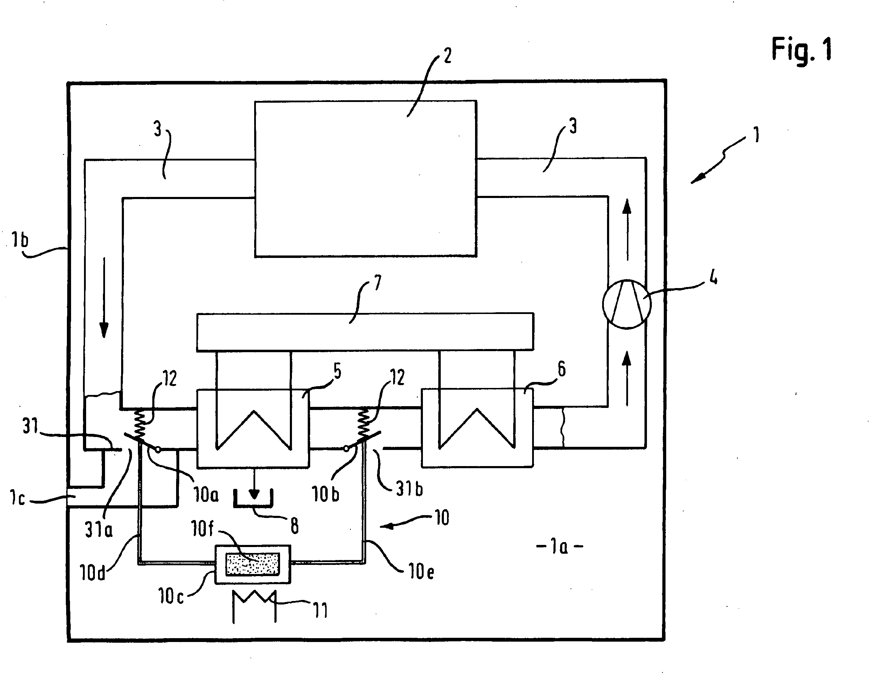

In einer schematischen Blockbilddarstellung in Fig. 1 sind die für die vorliegende Erläuterung wesentlichen Elemente eines Hausgeräts 1 zur Pflege von Wäschestücken dargestellt. Das Hausgerät 1 zur Pflege von Wäschestücken ist als Wäschetrockner 1 ausgebildet. Angeordnet in einem Innenraum 1 a, welcher von einem Gehäuse 1b von der Umgebung des Wäschetrockners 1 abgegrenzt ist, umfasst der Wäschetrockner 1 einen drehbaren Behälter 2 (Trommel) zur Aufnahme von Wäschestücken. Der Behälter 2 ist in einer Prozessluftführung 3, welche als Prozessluftkreislauf 3 ausgebildet ist und von einem Gebläse 4 angetrieben wird, angeordnet. Dabei durchströmt die in dem Prozessluftkreislauf 3 strömende Prozessluft auch den Behälter 2. Die durch den Behälter 2 geleitete Trockenluft bzw. Prozessluft durchläuft nach dem Austritt aus dem Behälter 2 einen ersten Wärmetauscher 5 zu ihrer Entfeuchtung, wobei der erste Wärmetauscher als kalte Seite 5 einer thermoelektrischen Wärmepumpe 5, 6, 7 ausgebildet ist. Die in der Prozessluft enthaltene Feuchtigkeit kondensiert im ersten Wärmetauscher 5; sie wird dort von der Prozessluft getrennt und in ein Sammelgefäß 8 abgeführt. Die aus dem ersten Wärmetauscher 5 austretende Prozessluft durchströmt dann einen zweiten Wärmetauscher 6 zu ihrer Erwärmung, wobei der zweite Wärmetauscher 6 als warme Seite 6 derselben Wärmepumpe 5, 6, 7 ausgebildet ist. Kernstück der Wärmepumpe 5, 6, 7 ist ein thermoelektrisches Modul 7, welches Peltier-Elemente enthält, die im Betrieb von elektrischem Strom durchflossen werden und dabei eine für die Funktion der Wärmepumpe 5, 6, 7 erforderliche Temperaturdifferenz zwischen der kalten Seite 5 und der warmen Seite 6 erzeugen. Hinter dem zweiten Wärmetauscher 6 gelangt die Prozessluft zurück in den Behälter 2, womit der Prozessluftkreislauf 3 geschlossen ist. Innerhalb des Behälters 2 kommt die erhitzte Prozessluft mit den zu trocknenden Wäschestücken in Berührung und nimmt dabei Feuchtigkeit auf.

Aus dem Innenraum 1a führt ein Abführungskanal 1c aus dem Gehäuse 1b heraus in eine Umgebung des Wäschetrockners 1. Der Abführungskanal 1c kann dazu dienen, Kühlluft für einen (nicht dargestellten) zusätzlichen, herkömmlichen Wärmetauscher zur weiteren Abkühlung der im Kreislauf 3 strömenden Prozessluft aus dem Gehäuse 1b abzuführen.

Der Wäschetrockner 1 umfasst des Weiteren eine Lufttauschvorrichtung 10, welche vor und hinter dem ersten Wärmetauscher 5 an den Prozessluftkreislauf 3 angeschlossen ist und nach dem Abschalten der Wärmepumpe 5, 6, 7 zum Abführen von in dem Prozessluftkreislauf 3 enthaltenen feuchten Prozessluft einerseits und zum Einführen trockener Luft aus einem Innenraum 1 a des Wäschetrockners 1 in den Prozessluftkreislauf 3 ausgebildet ist.

Zur Durchführung dieses Luftaustausches sind an einer äußeren Kanalwand 31 des als Strömungskanal 3 ausgebildeten Prozessluftkreislaufs 3 verschließbare Öffnungen 31a und 31 b ausgebildet. Die Öffnung 31 a liegt, in Richtung der strömenden Prozessluft gesehen, vor, und die Öffnung 31b hinter dem ersten Wärmetauscher 5; der zweite Wärmetauscher 6 folgt auf die Öffnung 31 b im Prozessluftkreislauf 3. Die Lufttauschvorrichtung 10 umfasst zwei Klappen 10a und 10b, welche zum Öffnen und Schließen der Öffnung 31 a bzw. 31 b angeordnet und entsprechend betätigbar sind. Die Klappe 10a öffnet sich in den Abführungskanal 1c; wird sie geöffnet, so gelangt Prozessluft aus dem Kreislauf 3 in den Abführungskanal 1c und durch diesen aus dem Gehäuse 1b heraus in die Umgebung des Wäschetrockners 1. Die Klappe 10 b öffnet sich zum Innenraum 1 a; wird sie geöffnet, so kann Luft aus dem Innenraum 1 a in den Prozessluftkreislauf 3 gelangen. Es versteht sich, dass das Gehäuse 1 b gemäß üblicher Praxis den Wäschetrockner 1 nicht luftdicht gegen seine Umgebung abschließt; vielmehr wird Luft, die über die Klappe 10c in den Prozessluftkreislauf 3 abgezogen wird, durch eindringende Luft aus der Umgebung ersetzt. Allerdings ist das Gehäuse 1 b gemäß üblicher Praxis dicht genug, um zu ermöglichen, dass sich die darin befindliche, vom Prozessluftkreislauf 3 aber getrennte Luft gegenüber der Luft in der Umgebung deutlich erwärmt. Nachfolgend wird beschrieben, wie dies vorteilhaft genutzt werden kann.

Dazu umfasst die Lufttauschvorrichtung 10 eine Betätigungseinrichtung, welche einen thermo-hydraulischen Zylinder 10c umfasst, der zum Betätigen beider Klappen 10a und 10b angeordnet ist. Der thermo-hydraulische Zylinder 10c ist über Koppelstangen 10d und 10e mit den Klappen 10a bzw. 10b verbunden. Es kann auch vorgesehen sein, dass die Lufttauschvorrichtung 10 zwei separate thermo-hydraulische Zylinder aufweist, von denen einer über eine Koppelstange mit der ersten Klappe 10a und der zweite über eine weitere Koppelstange mit der zweiten Klappe 10b verbunden ist.

Der thermo-hydraulische Zylinder 10c enthält ein Medium, welches temperaturabhängig sein Volumen ändert. Vorliegend ist das Medium als Wachs 10f ausgebildet, welches schmilzt und sich ausdehnt, wenn die Umgebungstemperatur um den thermo-hydraulischen Zylinder 10c eine Grenztemperatur erreicht bzw. überschreitet. Dabei ist der thermo-hydraulische Zylinder 10c und insbesondere das Wachs 10f thermisch mit der Wärmepumpe 5, 6, 7 und insbesondere mit dem ersten Wärmetauscher 5 gekoppelt. Die Erwärmungsenergie für das Wachs 10f zum Schmelzen bzw. zum Ausdehnen von diesem wird dann beim Ausschalten der Wärmepumpe 5, 6, 7 durch die kalte Seite 5 erbracht, die durch Wärmeleitung auf die Temperatur des thermoelektrischen Moduls 7 gebracht wird. Durch diese Ausdehnung des Wachses 10f werden die beiden Koppelstangen 10d und 10f bewegt und die damit verbundenen Klappen 10a und 10b im Wesentlichen gleichzeitig geöffnet - dies ist in Figur 1 entsprechend dargestellt. Dadurch kann die in dem Prozessluftkreislauf 3 noch enthaltene restliche warme feuchte Luft aus dem Wäschetrockner 1 hinausgebracht und trockene Luft aus dem Innenraum 1 a des Wäschetrockners 1 hereingesaugt werden. Die nach dem Abschalten der Wärmepumpe im Wäschetrockner 1 gespeicherte Energie kann dadurch für die Resttrocknung der in dem Behälter 2 enthaltenen Wäschestücke genutzt werden. Nach dem Ende der Trocknung kühlt sich der gesamte Wäschetrockner 1 ab und der thermo-hydraulische Zylinder 10c wird wieder in die Ausgangsstellung zurückgedrückt, da sich das Wachs 10f zusammenzieht und dadurch die Kolbenstange 10d und 10e entsprechend betätigt. Dadurch werden die Klappen 10a und 10b wieder geschlossen.

Der thermo-hydraulische Zylinder 10c ist beheizbar durch ein Heizelement 11, welches insbesondere als elektrisch betreibbares PTC-Heizelement 11 ausgebildet ist. Besonders bevorzugt ist es allerdings, den Zylinder 10c mit der kalten Seite 5 der Wärmepumpe 5, 6, 7 thermisch zu koppeln, um ihn zu beheizen, wenn die kalte Seite 5 sich nach dem Abschalten der Wärmepumpe 5, 6, 7 durch Temperaturausgleich erwärmt.

Der thermo-hydraulische Zylinder 10c und das darin enthaltende Wachs 10f sind auch zu verstehen als Symbole für einen alternativen Antrieb, welcher zum Beispiel ein Elektromotor oder eine Kombination aus zwei Elektromotoren mit entsprechender Transmission zum Betätigen der Klappen 10a und 10b sein kann.

Die Klappen 10 a und 10 b sind jeweils durch ein Federelement 12 belastet, um ein sicheres Schließen zu gewährleisten. Es sei bemerkt, dass je nach Ausbildung der Lufttauschvorrichtung solche Federelemente 12 nicht erforderlich sein müssen. Alternativ oder zusätzlich kann an Stelle jedes Federelements 12 ein Bimetallelement 12 vorgesehen sein, dass die Bewegung der Klappe 10a oder 10b statt des thermo-hydraulischen Zylinders 10c steuert.

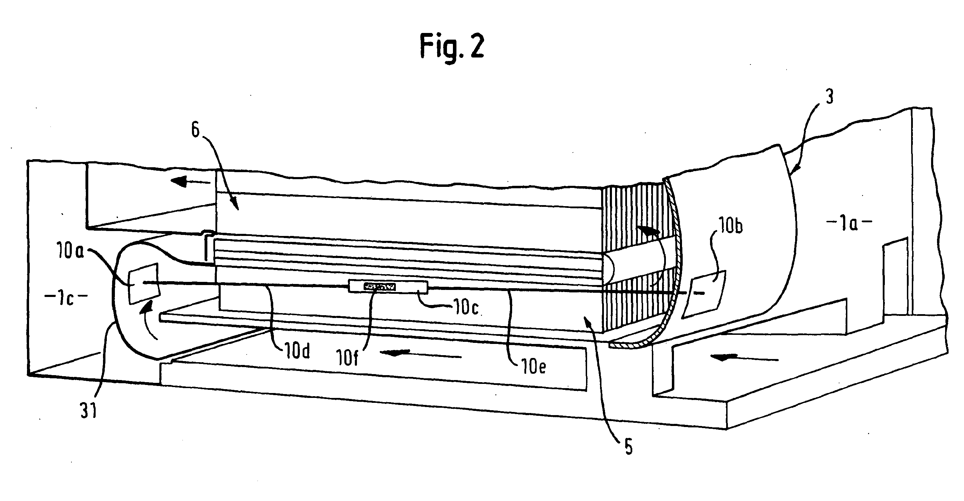

In Fig. 2 ist eine perspektivische Schnittdarstellung einer Bodengruppe des Wäschetrockners 1 gezeigt, in der vorliegend der wesentliche Teilbereich des Prozessluftkreislaufes 3 dargestellt ist. Die Prozessluft strömt dabei gemäß der gezeigten Pfeildarstellung in dem Prozessluftkreislauf 3 zunächst durch den ersten Wärmetauscher 5, wird dann durch den zweiten Wärmetauscher 6 geleitet und tritt dann in Richtung zum Behälter 2 wieder aus. Die beiden Klappen 10a und 10b sind als eckige Elemente an der Kanalwand 31 des Prozessluftkreislaufs 3 dargestellt. Sowohl die Anzahl als auch die Formgebung dieser Klappen 10a und 10b ist lediglich beispielhaft.

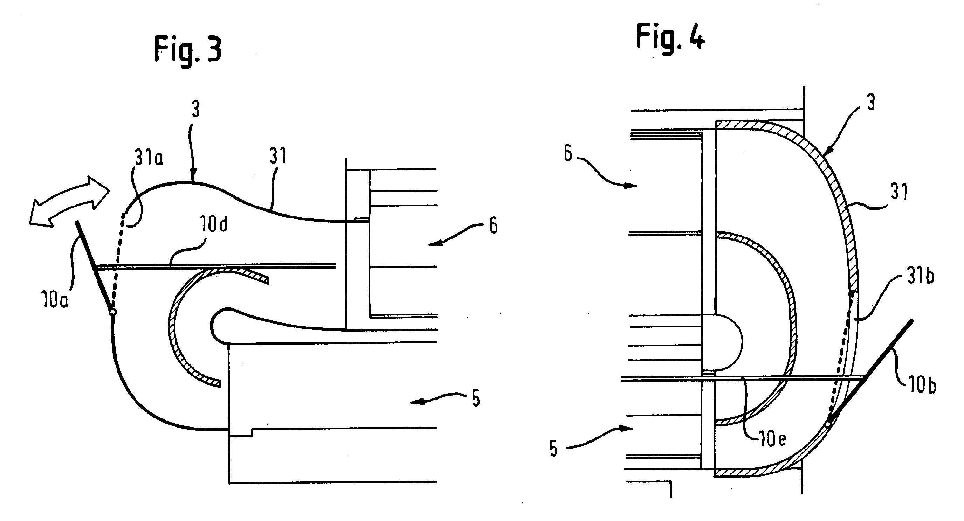

In Fig. 3 ist eine weitere schematische Darstellung eines Teilbereichs von Fig. 2 gezeigt. Es ist dabei eine geöffnete erste Klappe 10a gezeigt, welche derart konzipiert ist, dass sie nach außen geöffnet wird. Es kann auch vorgesehen sein, dass dieses Öffnen der ersten Klappe 10a derart erfolgt, dass sie in das innere des Prozessluftkreislaufes 3 bewegt wird.

Dabei ist die erste Klappe 10a in einem Bereich des Prozessluftkreislaufes 3 angeordnet, in welchem dieser zur Umlenkung der Prozessluft um etwa 180° ausgebildet ist. Die Ankopplung eines nicht dargestellten Abführungskanals kann in diesem Bereich relativ einfach und platzoptimiert erfolgen, so dass dadurch die warme feuchte Luft einfach aus dem Wäschetrockner 1 herausgeführt werden kann.

In Fig. 4 ist eine weitere schematische Schnittdarstellung eines Teilausschnitts der Darstellung gemäß Fig. 2 gezeigt. Die zweite Klappe 10b ist dabei ebenfalls an einem weiteren Umkehrbereich des Prozessluftkreislaufes 3 an der äußeren Kanalwand 31 angeordnet. Auch diese zweite Klappe 10b ist in einer geöffneten Stellung dargestellt, wobei auch hier das Öffnen nach außen erfolgt. Bevorzugt sind die beiden Klappen 10a und 10b derart angeordnet, dass ein Luftstrom ausgebildet werden kann, welcher einerseits die warme feuchte Luft zuverlässig aus dem Prozessluftkreislauf 3 herausführt und andererseits warme trockene Luft aus dem Innenraum 1 a des Wäschetrockners 1 einführt. Bevorzugt kann dabei durch die Anordnung der Klappen 10a und 10b ein sich selbst erzeugender Luftstrom eingestellt werden, welcher durch ein Ansaugen der warmen trockenen Luft aus dem Innenraum 1 a des Wäschetrockners 1 noch verstärkt werden kann.

## Patentansprüche

1. Hausgerät zur Pflege von Wäschestücken, mit einem Behälter (2) zur Aufnahme von Wäschestücken, einer Prozessluftführung (3), welche mit dem Behälter (2) verbunden ist, wobei Prozessluft durch den Behälter (2) strömt, und einer Wärmepumpe (5, 6, 7) mit einem ersten (5) und einem zweiten Wärmetauscher (6), welche in der Prozessluftführung (3) angeordnet sind, wobei der erste Wärmetauscher (5) zur Entfeuchtung der aus dem Behälter (2) austretenden Prozessluft und der zweite Wärmetauscher (6) zur Erwärmung der Prozessluft vor dem Eintritt in den Behälter (2) ausgebildet ist, **gekennzeichnet durch** eine Lufttauschvorrichtung (10), welche vor der Wärmepumpe (5, 6, 7) angeordnet ist und zum Abführen von in der Prozessluftführung (3) enthaltenen feuchten Prozessluft und zum Einführen von trockener Luft aus einem Innenraum (1a) des Hausgeräts (1) in die Prozessluftführung (3) ausgebildet ist.

2. Hausgerät nach Anspruch 1, bei welchem die Prozessluftführung (3) zumindest bereichsweise als Kanal mit einer Kanalwand (31) ausgebildet ist und in Strömungsrichtung der Prozessluft eine erste (31 a) und zumindest eine zweite verschließbare Öffnung (31 b) in der Kanalwand (31) ausgebildet sind.

3. Hausgerät nach Anspruch 2, bei welchem die erste verschließbare Öffnung (31 a) vor und die zweite verschließbare Öffnung (31b) nach dem ersten Wärmetauscher (5) ausgebildet ist.

4. Hausgerät nach Anspruch 2 oder 3, bei welchem die Lufttauschvorrichtung (10) eine erste Klappe (10a) zum Abdecken der ersten Öffnung (31 a) und eine zweite Klappe (10b) zum Abdecken der zweiten Öffnung (31 b) aufweist.

5. Hausgerät nach Anspruch 4, bei welchem die Lufttauschvorrichtung (10) eine Betätigungseinrichtung (10c) zum situationsabhängigen Betätigen der Klappen (10a, 10b) umfasst.

6. Hausgerät nach Anspruch 5, bei welchem die Betätigungseinrichtung (10c) zumindest einen Antrieb (10f) umfasst, welcher zum Betätigen der Klappen (10a, 10b) ausgebildet ist.

7. Hausgerät nach Anspruch 5, bei welchem die Betätigungseinrichtung zumindest einen thermo-hydraulischen Zylinder (10c) umfasst, welcher zur Betätigung der beiden Klappen (10a, 10b) mit diesen gekoppelt ist.

8. Hausgerät nach Anspruch 6, bei welchem der thermo-hydraulische Zylinder (10c) über jeweils eine Koppelstange (10d, 10e) mit einer Klappe (10a, 10b) verbunden ist.

9. Hausgerät nach Anspruch 7 oder 8, bei welchem der thermo-hydraulische Zylinder (10c) ein Medium (10f) aufweist, welches temperaturabhängig sein Volumen ändert und abhängig davon die Klappen (10a, 10b) betätigt.

10. Hausgerät nach Anspruch 9, bei welchem das Medium zumindest anteilig Wachs (10f) aufweist.

11. Hausgerät nach Anspruch 9 oder 10, bei welchem das Medium (10f) mittels einer Heizeinheit (11), insbesondere einer PTC-Heizeinheit (11), erwärmbar ist.

12. Hausgerät nach einem der Ansprüche 9 bis 11, bei welchem das Medium (10f) mit einem Wärmetauscher (5) thermisch gekoppelt ist und eine Erwärmung des Mediums durch einen Temperaturausgleich nach dem Abschalten der Wärmepumpe (5, 6, 7) erzeugbar ist.

13. Hausgerät nach einem der Ansprüche 7 bis 12, bei welchem Federelemente (12) angeordnet sind, wobei jedes der Federelemente (12) mit einer Klappe (10a, 10b) zum Schließen dieser verbunden ist.

14. Hausgerät nach Anspruch 5, bei welchem die Betätigungseinrichtung (10c) zumindest ein Bimetallelement (12) umfasst, welches mit den Klappen (10a, 10b) gekoppelt ist, wobei abhängig von der temperaturabhängigen Formveränderung des Bimetallelements (12) die Klappen (10a, 10b) betätigbar sind.

## Claims

1. Domestic appliance for care of items of laundry comprising a container (2) for reception of articles of laundry, a process air guide (3) connected with the container (2), wherein process air flows through the container (2), and a heat pump (5, 6, 7) with a first heat exchanger (5) and a second heat exchanger (6), which are arranged in the process air guide (3), wherein the first heat exchanger (5) is constructed for moisture removal from the process air issuing from the container (2) and the second heat exchanger is constructed for heating the process air prior to entry into the container (2), **characterised by** an air exchange device (10) which is arranged in front of the heat pump (5, 6, 7) and is constructed for discharge of moist process air contained in the process air guide (3) and for introduction into the process air guide (3) of dry air from an interior space (1a) of the domestic appliance (1).

2. Domestic appliance according to claim 1, in which the process air guide (3) is constructed at least in regions as a channel with a channel wall (31) and in flow direction of the process air a first closable opening (31a) and at least one second closable opening (31 b) are formed in the channel wall (31).

3. Domestic appliance according to claim 2, in which the first closable opening (31 a) is formed in front of and the second closable opening (31 b) after the first heat exchanger (5).

4. Domestic appliance according to claim 2 or 3, in which the air exchange device (10) has a first flap (10a) for covering the first opening (31 a) and a second flap (10b) for covering the second opening (31 b).

5. Domestic appliance according to claim 4, in which the air exchange device (10) comprises an actuating device (10c) for situation-dependent actuation of the flaps (10a, 10b).

6. Domestic appliance according to claim 5, in which the actuating device (10c) comprises at least one drive (10f) constructed for actuation of the flaps (10a, 10b).

7. Domestic appliance according to claim 5, in which the actuating device comprises at least one thermo-hydraulic cylinder (10c) which for actuation of the two flaps (10a, 10b) is coupled therewith.

8. Domestic appliance according to claim 6, in which the thermo-hydraulic cylinder (10c) is connected with each flap (10a, 10b) by way of a respective coupling rod (10d, 10e).

9. Domestic appliance according to claim 7 or 8, in which the thermo-hydraulic cylinder (10c) has a medium (10f) which changes its volume in dependence on temperature and actuates the flaps (10a, 10b) as a function thereof.

10. Domestic appliance according to claim 9, in which the medium comprises, at least in part, wax (10f).

11. Domestic appliance according to claim 9 or 10, in which the medium (10f) is heatable by means of a heating unit (11), particularly a PTC heating unit (11).

12. Domestic appliance according to any one of claims 9 to 11, in which the medium (10f) is thermally coupled with a heat exchanger (5) and a heating of the medium is producible by a temperature balancing after switching-off of the heat pump (5, 6, 7).

13. Domestic appliance according to any one of claims 7 to 12, in which spring elements (12) are arranged, wherein each of the spring elements (12) is connected with a flap (10a, 10b) for closing this.

14. Domestic appliance according to claim 5, in which the actuating device (10c) comprises at least one bimetallic element (12) coupled with the flaps (10a, 10b), wherein the flaps (10a, 10b) are actuable as a function of the temperature-dependent change in shape of the bimetallic element (12).

## Revendications

1. Appareil ménager destiné à l'entretien de linge, comprenant un réservoir (2) pour loger du linge, un dispositif de guidage d'air de procédé (3), lequel est raccordé au réservoir (2), l'air de procédé circulant à travers le réservoir (2), et une pompe à chaleur (5, 6, 7) munie d'un premier échangeur de chaleur (5) et d'un second échangeur de chaleur (6), lesquels sont disposés dans le dispositif de guidage d'air de procédé (3), le premier échangeur de chaleur (5) étant réalisé pour déshumidifier l'air de procédé sortant du réservoir (2) et le second échangeur de chaleur (6) étant réalisé pour échauffer l'air de procédé avant l'entrée dans le réservoir (2), **caractérisé par** un dispositif d'échange d'air (10), lequel est disposé devant la pompe à chaleur (5, 6, 7) et est réalisé pour évacuer l'air de procédé humide contenu dans le dispositif de guidage d'air de procédé (3) et pour introduire de l'air sec dans le dispositif de guidage d'air de procédé (3) à partir de l'espace intérieur (1 a) de l'appareil ménager (1).

2. Appareil ménager selon la revendication 1, dans lequel le dispositif de guidage d'air de procédé (3) est réalisé au moins en partie en tant que canal ayant une paroi de canal (31) et dans lequel une première ouverture (31a) et au moins une seconde ouverture (31 b) pouvant être obturées sont réalisées dans la paroi de canal (31) dans le sens de flux de l'air de procédé.

3. Appareil ménager selon la revendication 2, dans lequel la première ouverture (31 a) pouvant être obturée est réalisée devant le premier échangeur de chaleur (5) et la seconde ouverture (31 b) pouvant être obturée est réalisée après le premier échangeur de chaleur (5).

4. Appareil ménager selon la revendication 2 ou 3, dans lequel le dispositif d'échange d'air (10) présente un premier clapet (10a) destiné à recouvrir la première ouverture (31a) et un second clapet (10b) destiné à recouvrir la seconde ouverture (31 b).

5. Appareil ménager selon la revendication 4, dans lequel le dispositif d'échange d'air (10) comprend un dispositif d'actionnement (10c) destiné à actionner les clapets (10a, 10b) en fonction de la situation.

6. Appareil ménager selon la revendication 5, dans lequel le dispositif d'actionnement (10c) comprend au moins un entraînement (10f), lequel est réalisé pour commander les clapets (10a, 10b).

7. Appareil ménager selon la revendication 5, dans lequel le dispositif d'actionnement comprend au moins un vérin thermo-hydraulique (10c), lequel est couplé aux deux clapets (10a, 10b) pour l'actionnement de ceux-ci.

8. Appareil ménager selon la revendication 6, dans lequel le vérin thermo-hydraulique (10c) est raccordé à un clapet (10a, 10b) par l'intermédiaire de respectivement une tige de couplage (10d, 10e).

9. Appareil ménager selon la revendication 7 ou 8, dans lequel le vérin thermo-hydraulique (10c) présente un fluide (10f), lequel change son volume en fonction de la température et commande les clapets (10a, 10b) en fonction de ceci.

10. Appareil ménager selon la revendication 9, dans lequel le fluide présente de la cire (10f) au moins de manière proportionnelle.

11. Appareil ménager selon la revendication 9 ou 10, dans lequel le fluide (10f) peut être chauffé au moyen d'une unité de chauffage (11), notamment une unité de chauffage PTC (11).

12. Appareil ménager selon l'une quelconque des revendications 9 à 11, dans lequel le fluide (10f) est couplé thermiquement à un échangeur de chaleur (5) et dans lequel un échauffement du fluide peut être généré au moyen d'une compensation de température après l'arrêt de la pompe à chaleur (5, 6, 7).

13. Appareil ménager selon l'une quelconque des revendications 7 à 12, dans lequel des éléments à ressort (12) sont disposés, chacun des éléments à ressort (12) étant raccordé à un clapet (10a, 10b) pour obturer celui-ci.

14. Appareil ménager selon la revendication 5 dans lequel le dispositif d'actionnement (10c) comprend au moins un élément bimétallique (12), lequel est couplé aux clapets (10a, 10b), les clapets (10a, 10b) pouvant être commandés en fonction de la déformation, dépendant de la température, de l'élément bimétallique (12).
